# EUROPEAN PATENT APPLICATION

(11) **EP 2 660 909 A1**
(43) Date of publication of application: **06.11.2013**
(21) Application number: 12191966.6
(22) Date of filing: 09.11.2012
(51) Int. Cl.: H01M 4/92, B01J 23/38, C01B 31/00, C04B 35/52, H01M 8/10

(54) **Support for electrode catalyst and method of manufacturing the same, electrode catalyst, electrode, membrane-electrode assembly for fuel cell and fuel cell**

(30) Priority: 30.04.2012 US 201261640566 P; 07.11.2012 US 201213671365
(71) Applicant: Samsung SDI Co., Ltd., Yongin-si, Gyeonggi-do (KR)
(72) Inventor: Kim, Jun-Young, Gyeonggi-do (KR); Lee, Sung-Chul, Gyeonggi-do (KR); Min, Myoung-Ki, Gyeonggi-do (KR); Park, Yong-Bum, Gyeonggi-do (KR)
(74) Representative: Russell, Tim

(57) **Abstract**

A support for an electrode catalyst includes a carbon support and a crystalline carbon layer disposed on the surface of the carbon support and including a heteroatom which is chemically bonded to a carbon of the carbon support. Also described are a method of manufacturing the support, and an electrode support, an electrode for a fuel cell, a membrane-electrode assembly for a fuel cell, and a fuel cell including the electrode catalyst support.

## Description

The present invention relates to a support for an electrode catalyst and a method of manufacturing the same, as well as to an electrode catalyst comprising the support, and to a fuel cell including the same.

A fuel cell is a power generation system for producing electrical energy through an electrochemical redox reaction of an oxygen and hydrogen included in a hydrocarbon-based material such as methanol, ethanol, natural gas, and the like.

Such a fuel cell is a clean energy source that can replace fossil fuels. It includes a stack composed of unit cells and being capable of producing various ranges of power. Since it has higher energy density than a small lithium battery, it has been highlighted as a small portable power source.

Representative examples of a fuel cell are a polymer electrolyte membrane fuel cell (PEMFC). The PEMFC includes a polymer membrane having proton exchange properties, and an anode and a cathode that contact the polymer membrane on both sides of the polymer membrane. The anode, the polymer membrane, and the cathode form a membrane-electrode assembly.

Herein, the anode and the cathode include an electrode catalyst for activating a reaction. The electrode catalyst may generally use a metal catalyst such as platinum (Pt) supported by a carbon support. However, the electrode catalyst may be degraded as the surface area of the metal catalyst is drastically decreased due to corrosion of the carbon support and/or aggregation of the metal catalyst upon the operation of a fuel cell.

According to a first aspect of the present invention, provided is a support for an electrode catalyst that includes a carbon material and a crystalline carbon layer disposed on the surface of the carbon material and including a heteroatom-doped portion comprising a heteroatom which is chemically bound to carbon of the carbon material. Herein the term "heteroatom-doped portion" or refers to a portion or part of the crystalline carbon layer which includes a heteroatom which is chemically bonded to a carbon of the carbon material.

A support for an electrode catalyst according to embodiments of the invention may be capable of preventing degradation of an electrode catalyst.

The carbon support material may include carbon nanostructures, carbon black, graphite, graphene, or a combination thereof.

The heteroatom may be nitrogen (N), sulfur (S), or a combination thereof.

The heteroatom-doped portion may be present in an amount of 3 to 20 atomic % based on the total amount of atoms in the crystalline carbon layer. The total amount of atoms refers to the sum of carbon, nitrogen and oxygen atoms in the layer as measured by x-ray photoelectron spectroscopy (XPS).

The crystalline carbon layer may include polyaniline, polypyrrole, polythiophene, polyacrylonitrile, or a combination thereof.

The crystalline carbon layer may include a heteroatom-doped portion in which the heteroatom is nitrogen. Thus, the crystalline carbon layer may include a nitrogen (N) doped portion. The N-doped portion may include a graphitic N part, a pyridinic N part, a pyrrolic N part, an N-oxide part, or a combination thereof.

The N-doped portion may be present in an amount of about 3 to 20 at% based on the amount of the crystalline carbon layer.

The graphitic N part may be present in an amount of about 15 to 60% based on the amount of the N-doped portion.

The ratio (ID/IG) of the intensity (ID) at 1300cm⁻¹ and the intensity (IG) at 1550 cm⁻¹ in the Raman spectrum of the crystalline carbon layer may be within the range of 0.8 to 1.2.

According to another aspect, provided is a method of manufacturing a support for an electrode catalyst that includes forming a carbon layer having a heteroatom on a surface of a carbon support and performing heat treatment. The heat-treatment allows a crystalline carbon layer to be formed on the surface of the carbon support which includes a heteroatom-doped portion in which a heteroatom is chemically bonded to a carbon of the carbon support.

The heteroatom may include nitrogen (N), sulfur (S), or a combination thereof.

Forming the heteroatom-containing carbon layer may comprise reacting the carbon support with a heteroatom-containing monomer and a polymerisation initiator.

The forming a carbon layer having a heteroatom on a surface of a carbon support may be performed using polyaniline, polypyrrole, polythiophene, polyacrylonitrile, or a combination thereof.

The heat treatment may be performed at about 450 to 1500°C.

The forming the carbon layer having a heteroatom on a surface of a carbon support may be performed using a Fe catalyst.

The Fe catalyst may be used in an amount of about 0.1 mole to 6.0 moles based on 1 mole of a monomer for forming a polymer used for forming the carbon layer having a heteroatom.

The method may further include surface-modifying the carbon support with a conductive polymer before forming a carbon layer having a heteroatom on a surface of a carbon support.

The surface-modifying may be performed by polymer-wrapping with a hydrophilic conductive polymer.

Suitable polymers include, for example polystyrene sulfonate, poly(diallyl dimethyl ammonium chloride) (PDAC), poly(allylamine hydrochloride), poly(vinylsulfonic acid) (PVS), poly(ethyleneimine) (PEI), and combinations thereof.

According to another aspect of the present invention, provided is an electrode catalyst that includes the support for an electrode catalyst as described above, and a metal catalyst supported on the support.

In an embodiment, the metal catalyst is platinum.

According to another aspect of the present invention, provided is a fuel cell comprising: an anode and a cathode facing each other;
and a polymer electrolyte membrane interposed between the anode and the cathode; wherein at least one of the anode and the cathode includes an electrode substrate and a catalyst layer disposed on at least one side of the electrode substrate and including the electrode catalyst described above.

According to an aspect of the present invention, provided is a membrane-electrode assembly for a fuel cell that includes an anode and a cathode facing each other and polymer electrolyte membrane interposed between the anode and the cathode, wherein at least one of the anode and cathode includes an electrode substrate and a catalyst layer disposed on one side of the electrode substrate and including the electrode catalyst.

A more complete appreciation of the present invention and many of the attendant advantages thereof will be readily apparent as the same becomes better understood by reference to the following detailed description when considered in conjunction with the accompanying drawings, wherein:
FIG. 1 is a schematic view showing a structure of the crystalline carbon layer according to an embodiment of the present invention;
FIG. 2 is a cross-sectional view of a membrane-electrode assembly according to an embodiment of the present invention;
FIG. 3 is a graph showing the N-doping ratio and the graphite N ratio of the electrode supports according to Examples 1 to 3; and
FIG. 4 is a graph showing changes in the electrochemical activation surface areas (ECSA) according to cycle number of a platinum catalyst supported on the electrode supports prepared in Examples 1 to 3 and in the Comparative Example.

A support for an electrode catalyst according to an embodiment of the present invention will now be described.

The support for an electrode catalyst includes a carbon support and a crystalline carbon layer disposed on the surface of the carbon support and including a heteroatom being chemically-bound to carbon of the carbon support.

The carbon support may include, for example a carbon nanostructure, carbon black, acetylene black, graphite, graphene, or a combination thereof. The carbon nanostructure may be carbon nanotubes, carbon nanowires, and the like.

The carbon support may have a modified surface, and the surface may be modified by polymer-wrapping the carbon support with a conductive polymer. The polymer-wrapping may be performed on the surface of the carbon support while not damaging the carbon support and not damaging the conductivity.

The conductive polymer may be a water-soluble polymer or a polymer electrolyte. For example, the conductive polymer may be polystyrenesulfonate, poly(diallyl dimethyl ammonium chloride) (PDAC), poly(allylamine hydrochloride), poly(vinylsulfonic acid) (PVS), poly(ethyleneimine) (PEI), and the like. The surface-modified carbon support may have hydrophilicity.

The crystalline carbon layer may include a heteroatom. The heteroatom may include nitrogen (N), sulfur (S), or a combination thereof.

The crystalline carbon layer may be formed by polymerizing the surface-modified carbon support with a heteroatom-containing polymer, for example, polyaniline, polypyrrole, polythiophene, polyacrylonitrile, or a combination thereof, and performing a heat treatment. As noted above, however, the surface-modification step is optional.

Through the polymer polymerization and heat treatment, a chemical bond may be formed between a carbon of the carbon support and a heteroatom of the crystalline carbon layer, and a "heteroatom doped portion" may thereby be formed in the carbon support.

The heteroatom-doped portion not only improves anti-corrosion properties of the carbon support but also improves the durability of an electrode catalyst by functioning as an anchoring site on the surface of the support and enhancing the binding force between the support and the metal catalyst. Moreover, since the heteroatom-doped portion evenly exists on the entire surface of the carbon support, dispersion of the metal catalyst may be improved as well.

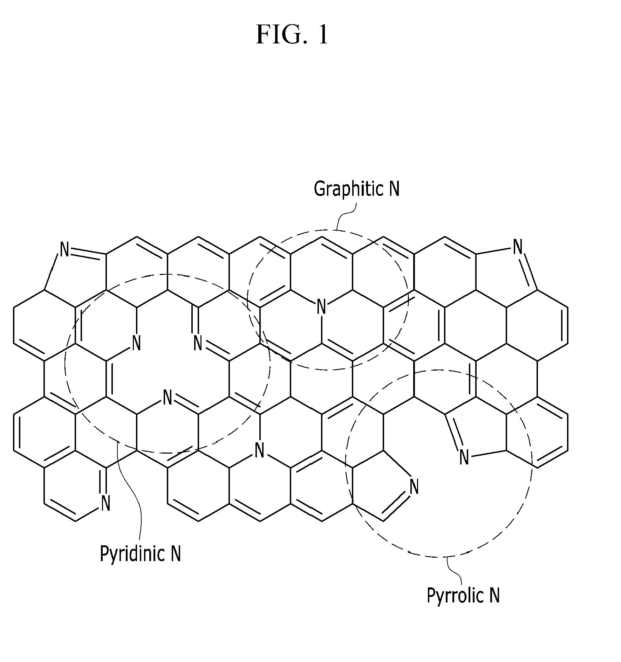

FIG. 1 is a schematic view showing a structure of the crystalline carbon layer.

Referring to FIG. 1, the crystalline carbon layer in this embodiment is a nitrogen (N)-doped carbon layer. The N-doped carbon layer may include a pyridinic N part represented by the following Chemical Formula 1, a graphitic N part represented by the following Chemical Formula 2, a pyrrolic N part represented by the following formula 3, and an N-oxide part.

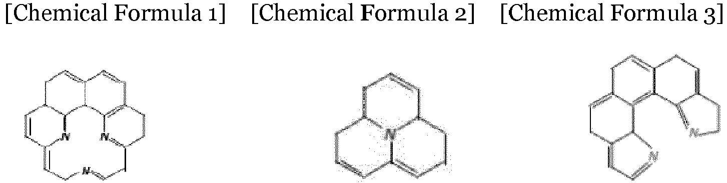

The N-doped portion may be included in an amount of about 3 to 20at% based on the total amount of the crystalline carbon layer. When the N-doped portion is included within this range, the support may be secured with durability while maintaining coating uniformity of the crystalline carbon layer.

The pyridinic N part, the pyrrolic N part and the N-oxide part may be changed into a graphitic N part through a heat treatment. Among the N-doped portion, the graphitic N part may be included in an amount of about 15 to 60% based on the N-doped portion. When the graphitic N part is included within this range, a crystalline carbon layer with a robust structure is formed, which improves the durability of the electrode catalyst.

Hereinafter, a method of manufacturing a support for an electrode catalyst is described.

The method of manufacturing a support for an electrode catalyst according to an embodiment of the invention includes surface-modifying the carbon support with a conductive polymer, forming a carbon layer having a heteroatom on a surface of the surface-modified carbon support, and performing heat treatment.

The surface-modifying may be performed by polymer-wrapping of the carbon support. The polymer-wrapping may be performed by radical polymerization using a hydrophilic polymer, such as polystyrene sulfonate, or a polymer electrolyte. The surface-modifying is an optional step, however, and may be omitted.

Subsequently, a carbon layer is formed by polymerizing the polymer wrapped carbon support with a heteroatom-containing polymer, such as polyaniline, polypyrrole, polythiophene, and polyacrylonitrile *in-situ.*

During the step of forming the carbon layer, a Fe catalyst may be optionally used. The Fe catalyst may be added in a form of a Fe precursor, such as iron chloride. The Fe catalyst may increase the crystallinity of the carbon layer even when the heat treatment is performed at a relatively low temperature, i.e. of lower than or equal to about 1000°C. When heat treatment is performed at a high temperature (i.e. about 2000°C) as in conventional methods, the heteroatom in the inside of the carbon layer may be damaged or lost. On the other hand, according to an embodiment of the present invention, a Fe catalyst is used and thus the heat treatment may be performed at a relatively low temperature, meaning that a crystalline carbon layer may be formed and simultaneously the heteroatom may be prevented from being damaged or lost.

The Fe catalyst may be used in an amount of about 0.1 mole to 6.0 moles based on 1 mole of a monomer used for forming the carbon layer having a heteroatom. When the Fe catalyst is included within this range, the carbon layer having a heteroatom may be uniformly formed and a high-crystalline carbon layer may be formed through a relatively low temperature heat treatment. Suitable monomers include, for example aniline, pyrrole, thiophene, acrylonitrile, or a combination thereof.

Subsequently, the carbon layer is subjected to heat-treatment. The heat treatment may be performed in a nitrogen atmosphere, hydrogen atmosphere, argon atmosphere, or air. The heat-treatment may be performed at about 450 to 1500°C. The heat-treatment may be performed at about 600 to 1000°C.

The heat treatment may be performed once or more. For example, a primary heat treatment may be performed at about 450 to 1000°C and then a secondary heat treatment may be performed at about 700 to 1500°C. A highly crystalline carbon layer may be formed through primary and secondary heat treatments.

Herein, in the heat treatment process of the carbon layer, an acid leaching process may be further performed to remove the remaining Fe precursor after the primary heat treatment has been performed. The acid leaching process may be performed at a temperature of about 60 to 90°C for about 1 hour to 6 hours by using a solution such as 0.5 M to 2.6 M H₂SO₄ solution.

Through the heat treatment, the carbon layer may be crystallized to provide a crystalline carbon layer.

The support for an electrode catalyst may be applicable to an electrode catalyst for a fuel cell.

The electrode catalyst for a fuel cell according to the present invention includes the above-described support for an electrode catalyst and a catalytic metal supported on the support.

The metal catalyst helps hydrogen oxidation and oxygen reduction reactions in a fuel cell, and may include, for example platinum, ruthenium, osmium, a platinum-ruthenium alloy, a platinum-osmium alloy, a platinum-palladium alloy, a platinum-M alloy (M is at least one transition element selected from Ga, Ti, V, Cr, Mn, Fe, Co, Ni, Cu, and Zn), and particularly at least one catalyst selected from platinum, ruthenium, osmium, a platinum-ruthenium alloy, a platinum-osmium alloy, a platinum-palladium alloy, a platinum-cobalt alloy, or platinum-nickel is preferable.

The metal catalyst may be used by being supported on the support, and since the process of supporting the metal catalyst with a support is widely known to those skilled in the art, further description on it is omitted herein.

Hereinafter, a membrane-electrode assembly according to an embodiment is described.

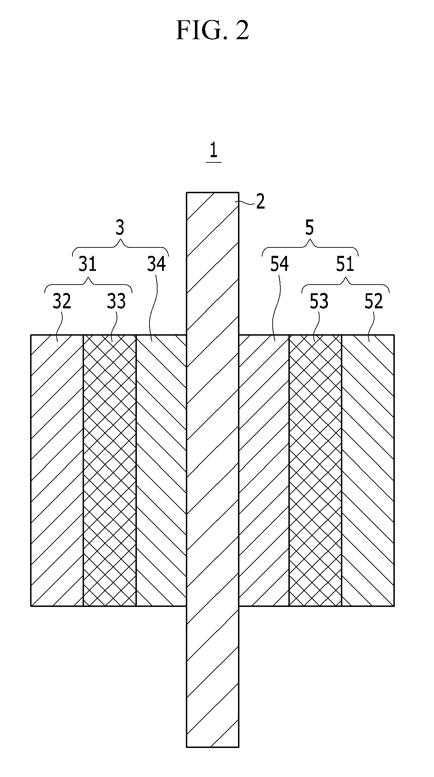

FIG. 2 is a cross-sectional view of a membrane-electrode assembly according to an embodiment.

The membrane-electrode assembly 1 includes an anode 3 and a cathode 5 facing each other and a polymer electrolyte membrane 2 interposed between the anode 3 and cathode 5.

The anode 3 and cathode 5 includes catalyst layers 34 and 54 and diffusion layers 31 and 51, respectively.

The diffusion layers 31 and 51 respectively include electrode substrates 32 and 52 supporting catalyst layers 34 and 54, and microporous layers 33 and 53 interposed between the catalyst layers 34 and 54 and the electrode substrates 32 and 52 and improving a gas diffusion effect.

In the catalyst layer 34 of the anode 3, oxidation reactions of a fuel are carried out, and in the catalyst layer 54 of the cathode 5, reduction reactions of an oxidizing agent are carried out. The catalyst layers 34 and 54 include the electrode catalyst described above.

The polymer electrolyte membrane 2 may be made of a polymer having excellent proton conductivity, and may perform ion exchange functions to transfer protons produced in the catalyst layer 34 of the anode 3 to the catalyst layer 54 of the cathode 5. Suitable polymers may include, for example, a perfluoro-based polymer, a benzimidazole-based polymer, a polyimide-based polymer, a polyetherimide-based polymer, a polyphenylenesulfide-based polymer, a polysulfone-based polymer, a polyethersulfone-based polymer, a polyetherketone-based polymer, a polyether-etherketone-based polymer, a polyphenylquinoxaline-based polymer, and the like, but is not limited thereto. Specific examples of the polymer may include poly(perfluorosulfonic acid), poly(perfluorocarboxylic acid), a sulfonic acid group-containing copolymer of tetrafluoro ethylene and fluorovinylether, defluorinated sulfide polyetherketone, aryl ketone, or polybenzimidazole such as poly (2,2'-(m-phenylene)-5,5'-bibenzimidazole), poly(2,5-benzimidazole), and the like, but are not limited thereto.

In a fuel cell, the cathode and the anode are not distinguished by their materials but distinguished by their functions, and the electrodes for a fuel cell include an anode for hydrogen oxidation and a cathode for oxygen reduction. In short, in the fuel cell, electricity is produced by supplying hydrogen or fuel to the anode and supplying oxygen to the cathode and causing an electrochemical reaction between the anode and the cathode. An oxidation reaction of hydrogen or organic fuel occurs in the anode, and a reduction reaction of oxygen occurs in the cathode so as to cause a voltage difference between the two electrodes.

The fuel cell according to an aspect of the invention includes the membrane-electrode assembly described above and a separator disposed on at least one side of the membrane-electrode assembly. The separator is in contact with one of the anode or the cathode and includes a flow path.

The following examples illustrate the present invention in more detail.

### Example 1

Carbon black was treated with ultrasonic wave in deionized water for 20 minutes to obtain a carbon suspension. Sodium 4-styrenesulfonate hydrate (C₈H₇SO₃Na·xH₂O) and potassium persulfate were added in a small amount to the carbon suspension and agitated at 65°C for 24 hours for radical polymerization

After the polymerization, the resultant solution was filtrated and washed with deionized water and methanol several times. Subsequently, carbon black polymer-wrapped with polystyrene sulfonic acid (PSA) was obtained by performing a vacuum-drying at 70°C.

Subsequently, a suspension was obtained by treating the polymer-wrapped carbon black with ultrasonic wave in deionized water. Pyrrole was put into the polymer-wrapped carbon black suspension and agitated for 30 minutes. Several drops of ammonium persulfate ((NH₄)₂S₂O₈) were added thereto and the resultant solution was agitated in a nitrogen atmosphere at 5°C for 24 hours for chemical polymerization. After the polymerization was completed, the resultant solution was filtrated and washed with deionized water and methanol several times. Subsequently, a polypyrrole (PPy) carbon layer was formed by performing a vacuum-drying at 70°C.

Subsequently, the polypyrrole (PPy) carbon layer was heat-treated at 800°C to form a crystalline carbon layer, and thus a carbon support coated with a crystalline carbon layer was prepared.

### Example 2

Carbon black was treated with ultrasonic wave in deionized water for 20 minutes to obtain a carbon suspension. Aniline was added to the carbon suspension and agitated for 30 minutes. FeCl₃ aqueous solution (3 mole ratio based on the aniline) was added thereto and then ammonium persulfate ((NH₄)₂S₂O₈) was added thereto and agitated in a nitrogen atmosphere at 5°C for 24 hours for chemical polymerization. After the polymerization was completed, the resultant solution was filtrated and washed with deionized water and methanol several times. Subsequently, the resultant was performed a vacuum-drying at 70°C to form a polyaniline carbon layer.

Subsequently, a primary heat treatment at 700°C was performed on the polyaniline carbon layer to crystallize the carbon layer. After the primary heat treatment, any remaining Fe was removed by an acid leaching process, and then a secondary heat treatment at 700°C was performed to prepare a carbon support coated with a crystalline carbon layer.

### Example 3

A carbon support coated with a crystalline carbon layer was prepared according to the same method as in Example 2, except that the primary heat treatment process was performed at 900°C and the secondary heat treatment process was performed at 900°C.

### Comparative Example 1

Carbon black without a carbon layer was prepared as an electrode support.

### Evaluation 1

The N-doping ratio and the graphite N ratio of the carbon supports according to Examples 1 to 3 were determined. The N-doping ratio and the graphitic N ratio were analyzed using an x-ray photoelectron spectroscopy (XPS), as follows.

All samples analyzed by XPS were first dried in a vacuum at 100 °C for 4 h. The XPS spectra was obtained on a VG ESCALAB 220-I system using MgKα X-ray radiation as the excitation source with a pass energy of 1253.6 eV. Survey scans were collected from 0~1100 eV with a pass energy (46.95 eV) and high resolution scans were performed with the pass energy adjusted to 23.5 eV. The samples were oriented such that the axial direction was in the plane of the X-ray source and the analyzer detection slit. The electron take-off angle was at 30°. During all XPS experiments, the vacuum system was maintained at approximately 10⁻⁹ Torr. A non-linear least square curve fitting program (XPSPEAK₉₅ software) with a Gaussian-Lorentzian mix function and Shirley background subtraction was used to deconvolve the XPS peaks. All binding energies were referenced to the C1s neutral carbon peak at 284.6 eV for calibration ^{[S1]}. Atomic ratios were estimated from the XPS spectra after correcting the relative peak areas by sensitivity factors based on the transmission characteristics of the Physical Electronics SCA^{[S2]}_{.}
[S1] Xie, Y.; Sherwood, P. M. A. Chem. Mater. 1990, 2, 293.
[S2] Moulder, J. F.; Stickle, W. F.; Sobol, P. E.; Bomben, K. D. Handbook of X-ray Photoelectron Spectroscopy, Chastain, J. Ed., Eden Prairie, MN: Perkin-Elmer Corporation, 1992.

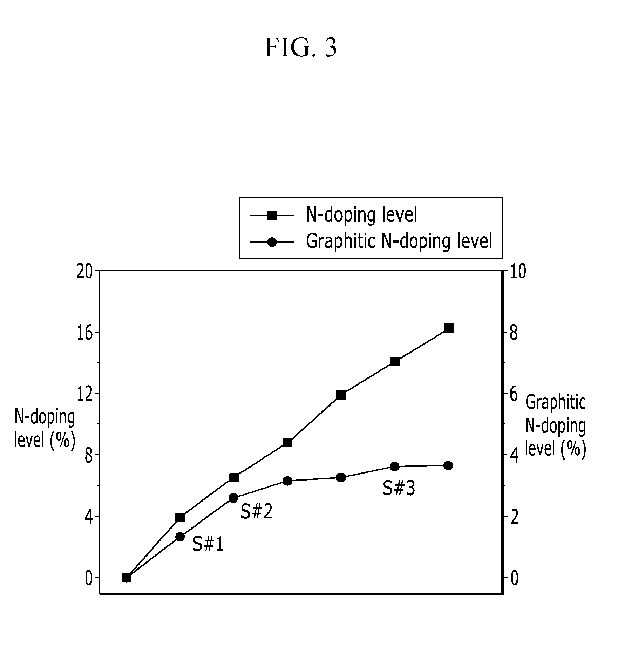

The results are shown in FIG. 3.

FIG. 3 is a graph showing the N-doping ratio and the graphite N ratio of the electrode supports according to Examples 1 to 3. Referring to FIG. 3, it can be seen that the electrode supports according to Examples 1 to 3 included a heteroatom-doped portion, i.e. an N-doped portion at a ratio of about 3 to 20at%, and a graphitic-N part at a ratio of about 0.45 to 12at% based on the total number of atoms (carbon, nitrogen and oxygen) in the carbon layer. The graphite N ratio corresponded to about 15 to 60 atomic % based on the total number of atoms in the heteroatom (i.e. N)-doped portion.

### Evaluation 2

The crystallinity of the carbon layer of the carbon supports prepared according to Examples 1 to 3 was determined.

The crystallinity of the carbon layer may be confirmed by Raman spectrum, specifically, from the ratio (I_{D}/I_{G}) of the intensity (I_{D}) at 1300cm⁻¹ and the intensity (I_{G}) at 1550cm⁻¹.

The results are shown in Table 1.

**[Table 1]**

| | I_{D}/I_{G} |
|---|---|
| Example 1 | 1.06 |
| Example 2 | 0.94 |
| Example 3 | 0.83 |
| Comparative Example | 1.80 |

It can be seen from Table 1 that since the electrode supports according to Examples 1 to 3 had a ratio (I_{D}/I_{G}) of about 0.8 to 1.2, the electrode supports according to Examples 1 to 3 had high crystallinity.

### Evaluation 3

A platinum catalyst was prepared by supporting 40wt% platinum (Pt) on the carbon supports according to Examples 1 to 3 and Comparative Example 1.

The electrochemical surface area (ECSA) according to the cycle number of the platinum catalyst was then evaluated.

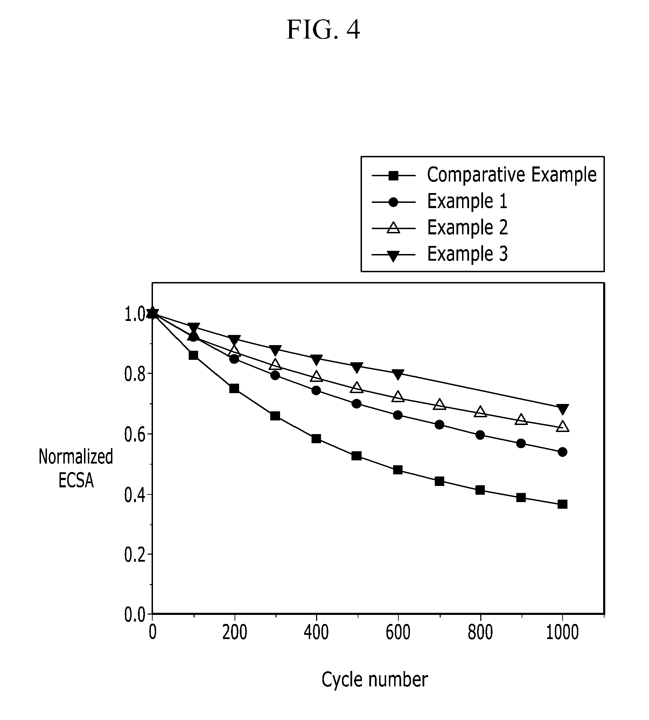

The results are shown in FIG. 4.

FIG. 4 is a graph showing changes in the electrochemical activation surface areas (ECSA) according to cycle number of a platinum catalyst supported on the electrode supports prepared according to Examples 1 to 3 and Comparative Example 1.

Referring to FIG. 4, it may be seen that the platinum catalysts using the carbon supports according to Examples 1 to 3 had a low decrement rate of the electrochemical surface area (ECSA), compared with the platinum support using the carbon support according to Comparative Example 1.

It may be seen from the low decrement rate that the carbon supports according to Examples 1 to 3 had a lower extent of degradation than the carbon support according to the Comparative Example.

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A support for an electrode catalyst comprising
a carbon support; and
a crystalline carbon layer disposed on the surface of the carbon support and including a heteroatom-doped portion comprising a heteroatom which is chemically bound to carbon of the carbon support.

2. A support as claimed in claim 1, wherein the carbon support is selected from the group consisting of carbon nanostructures, carbon black, graphite, graphene, and combinations thereof.

3. A support as claimed in claim 1 or claim 2, wherein the crystalline carbon layer includes polyaniline, polypyrrole, polythiophene, polyacrylonitrile, or a combination thereof.

4. A support as claimed in any preceding claim, wherein the heteroatom is nitrogen, sulphur or a combination thereof.

5. A support as claimed in any preceding claim, wherein the heteroatom is nitrogen.

6. A support as claimed in any preceding claim, wherein the heteroatom-doped portion is present in an amount of 3 to 20 atomic % based on the total amount of the crystalline carbon layer.

7. A support as claimed in claim 6, wherein the heteroatom-doped portion comprises a graphitic-nitrogen portion, preferably wherein the graphitic-nitrogen portion is present in an amount of 15 to 60 atomic % based on the total amount of the heteroatom-doped portion.

8. A support as claimed in any preceding claim, wherein the ratio (ID/IG) of the intensity (ID) at 1300cm⁻¹ and the intensity (IG) at 1550cm⁻¹ in the Raman spectrum of the crystalline carbon layer is between 0.8 to 1.2.

9. A method of preparing a support for an electrode catalyst comprising:
forming a heteroatom-containing carbon layer on a surface of a carbon support; and
performing heat-treatment to form a crystalline carbon layer disposed on the surface of the carbon support and including a heteroatom-doped portion comprising a heteroatom which is chemically bound to carbon of the carbon support.

10. A method as claimed in claim 9, wherein the heat-treatment is performed at a temperature between 450°C to 1500°C.

11. A method as claimed in claim 9 or claim 10, wherein forming the heteroatom-containing carbon layer comprises reacting the carbon support with a heteroatom-containing monomer and a polymerisation initiator, preferably wherein the heteroatom-containing monomer is selected from the group consisting of aniline, pyrrole, thiophene, acrylonitrile and combinations thereof.

12. A method as claimed in claim 11, wherein the reaction is carried out in the presence of a Fe catalyst, preferably wherein the Fe catalyst is used in an amount of 0.1 moles to 6 moles based on 1 mole of the heteroatom-containing monomer.

13. A method as claimed in any of claims 9 to 12, further comprising the step of surface-modifying the carbon support before forming the heteroatom-containing carbon layer, preferably wherein the surface-modifying is performed by polymer wrapping with a hydrophilic conductive polymer.

14. An electrode catalyst comprising a support as claimed in any one of claims 1 to 8 and a metal catalyst supported on the support, preferably wherein the metal catalyst is platinum.

15. A fuel cell comprising:
an anode and a cathode facing each other;
and a polymer electrolyte membrane interposed between the anode and the cathode;
wherein at least one of the anode and the cathode includes an electrode substrate and a catalyst layer disposed on one side of the electrode substrate and including the electrode catalyst according to claim 14.
